# FASCICULE DE BREVET EUROPEEN

(11) **EP 3 793 894 B1**
(45) Date de publication et mention de la délivrance du brevet: **01.11.2023**
(21) Numéro de dépôt: 19723455.2
(22) Date de dépôt: 16.05.2019
(51) Int. Cl.: B63G 8/36, F16K 1/00

(54) **SYSTÈME D'ALIMENTATION EN AIR FRAIS POUR UN SOUS-MARIN ET SOUS-MARIN COMPORTANT UN TEL SYSTÈME**
FRISCHLUFTZUFUHRSYSTEM FÜR EIN UNTERSEEBOOT UND UNTERSEEBOOT MIT EINEM SOLCHEN SYSTEM
FRESH-AIR SUPPLY SYSTEM FOR A SUBMARINE AND SUBMARINE INCLUDING SUCH A SYSTEM

(30) Priorité: 18.05.2018 FR 1800484
(43) Date de publication de la demande: 24.03.2021
(73) Titulaire: Naval Group, 75015 Paris (FR)
(72) Inventeur: PAUMIER, Philippe, 16600 RUELLE SUR TOUVRE (FR)
(74) Mandataire: Lavoix
(86) Numéro de dépôt international: PCT/EP2019/062708
(87) Numéro de publication internationale: WO 2019/219860

(56) Documents cités:
- EP-A2- 1 468 906
- EP-A2- 1 468 906
- US-A- 3 863 584
- US-A- 3 863 584
- GABLER ULRICH: "PROPULSION PLANTS", SUBMARINE DE, BERNARD UND GRAEFE VERL, BONN, DE, vol. Chapter 4, 1 janvier 2000 (2000-01-01), pages 63-81, XP007908945, ISBN: 978-3-7637-6202-6
- GABLER ULRICH: "PROPULSION PLANTS", 1 January 2000 (2000-01-01), SUBMARINE DESIGN, BERNARD UND GRAEFE VERL, BONN, DE, PAGE(S) 63 - 81, XP007908945, ISBN: 978-3-7637-6202-6 * *

## Description

La présente invention concerne un système d'alimentation en air frais pour un sous-marin. L'invention concerne également un sous-marin comportant un tel système.

Les sous-marins à propulsion diesel-électrique comportent généralement un tube d'air frais rétractable pour prélever de l'air à la surface de l'eau lorsque le sous-marin est immergé à faible profondeur. L'air prélevé est acheminé vers l'intérieur du sous-marin, notamment pour assurer l'alimentation en air d'un moteur diesel du sous-marin.

En pratique, l'architecture du tube d'air frais est contrainte par de nombreux facteurs, comme la nécessité de résister à la pression exercée par l'eau alors que le sous-marin est immergé, que le tube soit déployé ou non. Un système conforme à l'état de l'art est décrit dans le document "Propulsion Plants", Gabler Ulrich, 01. Janvier 2000, Submarine de, Bernard und Graefe Verlag, Bonn, Chapter 4, 63-81, ISBN: 978-3-7637-6202-6.

Un inconvénient découlant de ces contraintes est que, dans les systèmes connus, le diamètre libre pour le passage de l'air frais est réduit, ce qui engendre des pertes de charge de l'alimentation d'air frais qui peuvent être importantes au point de dégrader les performances de combustion du moteur. Cela peut compromettre le bon fonctionnement du sous-marin lorsqu'il est immergé, ce qui n'est pas acceptable.

L'invention vise donc à proposer un système d'alimentation en air frais pour un sous-marin qui remédie à ces inconvénients.

A cet effet, l'invention propose un système d'alimentation en air frais pour un sous-marin, comportant :
- un corps s'étendant selon un axe longitudinal ;
- un tube de prélèvement d'air frais monté coulissant le long de l'axe longitudinal à l'intérieur du corps entre une position rétractée et une position déployée ;
- un clapet mobile en translation le long de l'axe longitudinal entre une position de fermeture d'une extrémité supérieure du tube de prélèvement et une position d'ouverture du tube de prélèvement.

Une tête du clapet est placée à l'extérieur du tube de prélèvement et, dans la position de fermeture, la tête du clapet repose sur un siège formé par un rebord d'extrémité du tube de prélèvement présentant un diamètre supérieur au diamètre intérieur du tube de prélèvement.

Le système d'alimentation comporte un vérin adapté pour déplacer le tube de prélèvement entre les positions déployée et rétractée, le vérin étant placé à l'extérieur du corps.

Grâce à l'invention, la présence du clapet n'engendre pas de réduction excessive du débit d'air pouvant circuler dans le tube de prélèvement, puisque le siège sur lequel il repose est formé à l'extérieur du tube et que ce siège présente un diamètre supérieur au diamètre interne du tube. Les pertes de charge sont ainsi réduites.

Selon des aspects avantageux mais non obligatoires de l'invention, un tel système d'alimentation en air frais peut incorporer une ou plusieurs des caractéristiques suivantes, prises isolément ou suivant toute combinaison techniquement admissible :
- Le corps comporte une partie tubulaire inférieure et une partie tubulaire supérieure alignées le long de l'axe longitudinal et fixées l'une à l'autre, la partie tubulaire supérieure comportant au moins un logement recevant un palier de guidage pour guider radialement le tube de prélèvement en coulissement entre les positions rétractée et déployée, les parois intérieures des parties tubulaires inférieure et supérieure étant maintenues à distance du tube de prélèvement sans contact avec le tube de prélèvement.
- Le tube de prélèvement présente, au niveau de son extrémité supérieure, des parois évasées qui s'écartent en direction du rebord d'extrémité.
- Le système comporte en outre une structure de support montée solidaire de l'extrémité supérieure du tube de prélèvement, un actionneur monté sur la structure de support pour ouvrir le clapet, et un ressort de fermeture du clapet, le ressort étant placé à l'intérieur d'une portion creuse du clapet s'étendant sous la tête du clapet et étant reçu à l'intérieur du tube de prélèvement lorsque le clapet est dans la position de fermeture.
- Le vérin comporte une tige mobile en translation le long de l'axe longitudinal par rapport à une enveloppe fixe du vérin solidaire du corps, la tige mobile étant connectée à l'extrémité supérieure du tube de prélèvement par l'intermédiaire d'une pièce de liaison solidaire de l'extrémité supérieure du tube de prélèvement.
- Le système comporte en outre un tube auxiliaire monté sur l'enveloppe fixe du vérin et s'étendant selon l'axe longitudinal.
- Le système comporte un premier joint d'étanchéité entre la tête du clapet et le rebord d'extrémité, et un deuxième joint d'étanchéité entre une pièce de liaison solidaire de l'extrémité supérieure du tube de prélèvement et un palier de guidage monté dans le corps.
- Le système comporte un volume de lubrifiant placé à l'intérieur du corps en dessous des premier et deuxième joints d'étanchéité et en regard de l'extrémité supérieure du tube de prélèvement.

Selon un autre aspect, l'invention concerne un sous-marin comportant un tel système d'alimentation en air frais.

L'invention sera mieux comprise et d'autres avantages de celle-ci apparaîtront plus clairement à la lumière de la description qui va suivre d'un mode de réalisation d'un système d'alimentation en air frais pour un sous-marin donnée uniquement à titre d'exemple et faite en référence aux dessins annexés, dans lesquels :
- la figure 1 est une vue schématique en coupe longitudinale d'un système d'alimentation en air frais d'un sous-marin conforme à l'invention ;
- la figure 2 est une vue schématique d'une partie inférieure d'un corps du système d'alimentation de la figure 1 ;
- la figure 3 est une vue schématique d'une partie supérieure d'un corps du système d'alimentation de la figure 1 ;
- la figure 4 est une vue schématique en coupe et en perspective d'un clapet du système d'alimentation de la figure 1 ;
- la figure 5 est une vue élargie de la zone V de la figure 1.

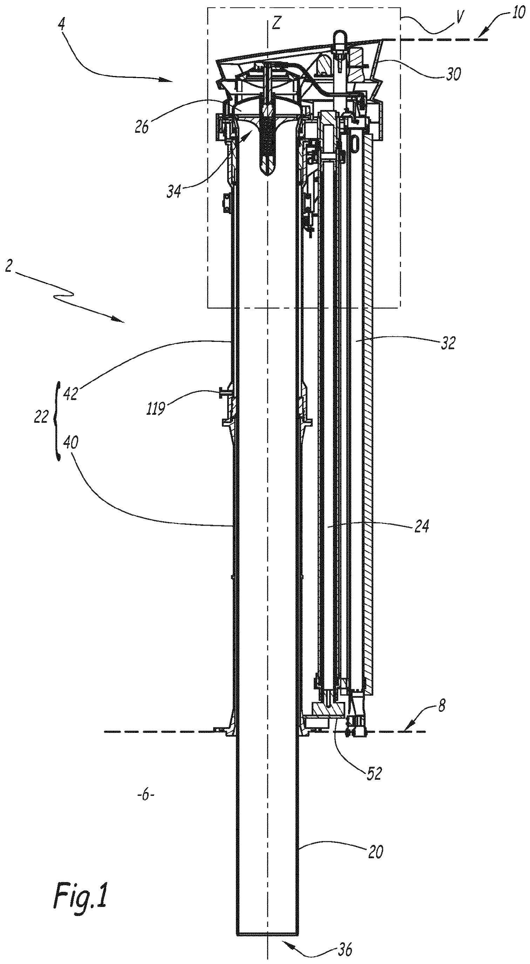

La figure 1 représente une portion d'un sous-marin 2 à propulsion diesel-électrique comprenant un système d'alimentation 4 en air frais. En variante, le sous-marin 2 est un sous-marin à propulsion nucléaire.

Le système d'alimentation 4 est configuré pour prélever de l'air frais à la surface de l'eau lorsque le sous-marin 2 est immergé puis pour acheminer l'air prélevé vers l'intérieur 6 du sous-marin 2. Par exemple, l'air frais prélevé sert à alimenter un ou plusieurs moteurs diesel embarqués à bord du sous-marin 2 et assurant la propulsion du sous-marin 2.

Par exemple, le système d'alimentation 4 est monté sur une coque 8 du sous-marin 2, de préférence en étant au moins partiellement reçu à l'intérieur d'un massif du sous-marin 2.

L'intérieur 6 du sous-marin 2 peut comporter un système de traitement de l'air pour déshumidifier l'air frais prélevé avant son utilisation. A titre d'exemple, les traits en pointillés portant la référence 10 représentent le sommet du massif du sous-marin.

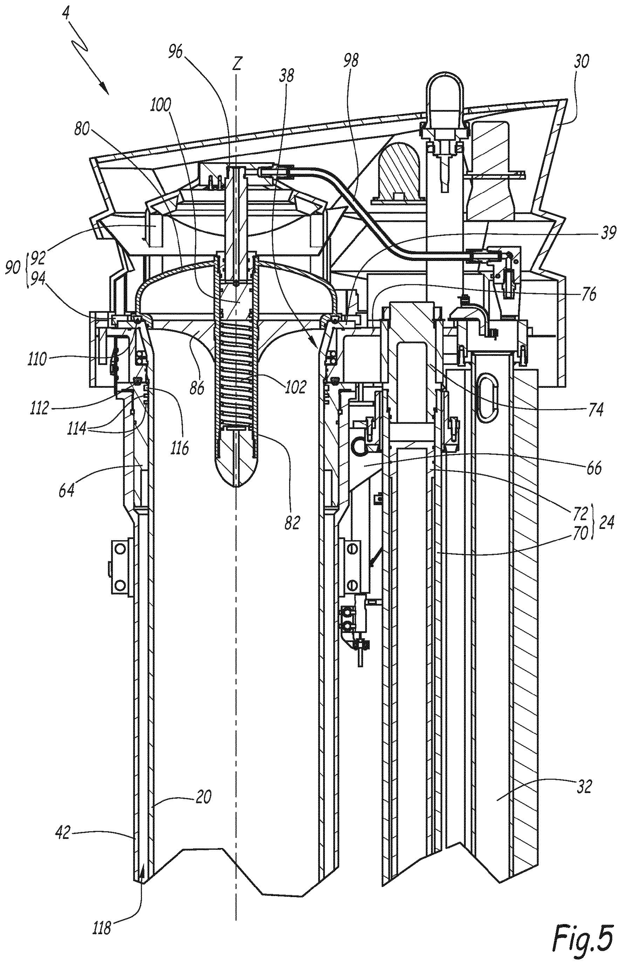

Comme illustré sur les figures 1 et 5, le système d'alimentation 4 comporte un tube 20 pour le prélèvement d'air frais, un corps 22 tubulaire, un vérin 24, un clapet de fermeture 26 du tube 20 monté au niveau d'une tête supérieure du système d'alimentation 4.

La référence « Z » désigne un axe longitudinal fixe du système d'alimentation 4, ici orienté essentiellement verticalement. Dans ce qui suit, le terme « radial » désigne une direction perpendiculaire à l'axe longitudinal Z et passant par l'axe longitudinal Z.

Lorsque les termes « inférieur » et « supérieur » sont employés en référence à des éléments du système d'alimentation 4, le terme « inférieur » désigne un élément se trouvant plus près de la coque 8 que ne l'est un élément dit « supérieur ». Il en va de même pour les termes « dessous » et « dessus », respectivement.

Dans l'exemple illustré, le système d'alimentation 4 comporte également un carénage 30 et un tube auxiliaire 32 dont le rôle respectif est précisé dans ce qui suit.

Le tube 20 est creux et s'étend, le long de l'axe longitudinal Z, entre une extrémité supérieure 34 et une extrémité inférieure 36 qui débouche à l'intérieur 6 du sous-marin 2.

De préférence, le tube 20 possède une forme de cylindre d'axe longitudinal Z avec une symétrie de révolution autour de l'axe longitudinal Z. Par exemple, le tube 20 est réalisé en matière métallique.

A titre d'exemple fourni à titre illustratif et non nécessairement limitatif, le tube 20 présente un diamètre interne, mesuré radialement par rapport à l'axe longitudinal Z, compris entre 10cm et 80cm. Les parois du tube 20 ont une épaisseur comprise entre 1cm et 2cm. La longueur du tube 20 est comprise entre 2 mètres et 10 mètres.

Au niveau de son extrémité supérieure 34, le tube 20 comporte un rebord d'extrémité 39, par exemple en forme de bride de préférence plate. Le rebord 39 s'étend perpendiculairement à l'axe Z vers l'extérieur du tube 20. En d'autres termes, le rebord 39 s'étend à l'extérieur du tube 20.

Le diamètre mesuré entre les parois internes du rebord d'extrémité 39 est supérieur au diamètre interne du tube 20. A titre d'exemple fourni à titre illustratif et non nécessairement limitatif, le diamètre interne du rebord d'extrémité 39, mesuré radialement par rapport à l'axe longitudinal Z, est supérieur ou égal à 110% ou à 120% du diamètre interne du tube 20.

Par exemple, le tube 20 présente, au niveau de son extrémité supérieure 34, des parois évasées 38 qui s'écartent du centre du tube 20 en direction du rebord d'extrémité 39 et qui sont prolongées par le rebord d'extrémité 39.

En d'autres termes, le diamètre interne du tube 20 est essentiellement constant sur toute sa longueur sauf au niveau de l'évasement 38 et du rebord d'extrémité 39, où ce diamètre est supérieur au diamètre mesuré le long du reste du tube 20.

Le tube 20 est monté à l'intérieur du corps 22 et peut se déplacer par coulissement par rapport au corps 22, le long de l'axe longitudinal Z, entre une position rétractée et une position déployée par rapport au corps 22.

Par exemple, lorsque le sous-marin 2 est immergé jusqu'à une profondeur de 10 mètres ou de 15 mètres, le tube 20 peut être déployé pour amener son extrémité supérieure 34 jusqu'à la surface de l'eau afin d'y prélever de l'air frais.

On comprend que lorsque le sous-marin plonge à une profondeur plus importante, le système d'alimentation 4 est complètement submergé et ne permet donc plus de prélever de l'air, puisque le tube 20 n'est pas assez long pour être hissé jusqu'à la surface de l'eau.

Sur les figures 1 et 5, le tube 20 est illustré dans la position rétractée. Le tube 20 est aussi nommé « tube hissable ».

Le corps 22 forme une enveloppe extérieure de protection pour le tube 20. Le corps 22 est ici un corps creux tubulaire de forme essentiellement cylindrique aligné selon l'axe longitudinal Z et dont les parois internes délimitent un volume interne de réception pour accueillir le tube 20. Par exemple, le corps 22 est réalisé en matière métallique.

Selon des exemples, la longueur du corps 22 est inférieure ou égale à la longueur du tube 20. En pratique, le corps 22 peut être plus court que le tube 20 si la bride 50 de fixation à la coque 8 est surélevée par rapport à la position de l'extrémité inférieure 36 lorsque le tube 20 est dans la position rétractée. Par exemple, la longueur du corps 20 est comprise entre 50% et 100% de la longueur du tube 20.

De préférence, le corps 22 comporte une partie tubulaire inférieure 40 et une partie tubulaire supérieure 42, alignées le long de l'axe longitudinal Z et fixées l'une à l'autre, par exemple par soudage ou par boulonnage ou encore par rivetage.

Dans cet exemple, les parties tubulaires inférieure 40 et supérieure 42 ont une longueur similaire, par exemple essentiellement égale à la moitié de la longueur du corps 22, ces longueurs étant mesurées selon l'axe longitudinal Z.

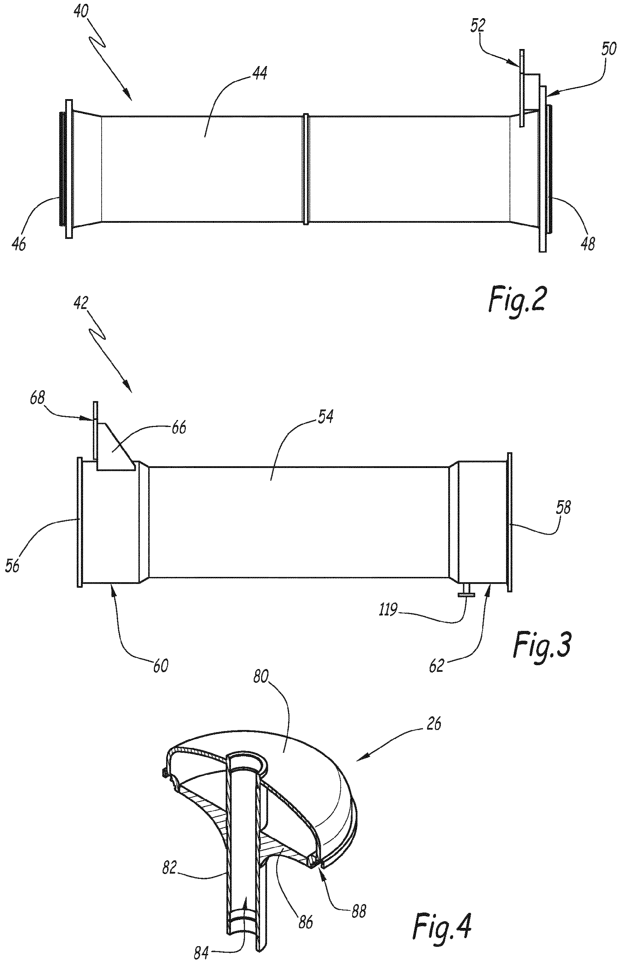

La partie tubulaire inférieure 40, illustrée sur la figure 2, comporte un corps 44 de forme cylindrique qui s'étend entre une extrémité supérieure 46 et une extrémité inférieure 48 sur laquelle est formée une bride inférieure 50 destinée à être fixée sur la coque 8.

Dans cet exemple, le corps 44 comprend également un support 52 de fixation du vérin 24.

La partie tubulaire supérieure 42, illustrée sur la figure 3, comporte un corps 54 de forme cylindrique qui s'étend entre une extrémité supérieure 56 et une extrémité inférieure 58. L'extrémité inférieure 58 de la partie tubulaire supérieure 42 est ici connectée à l'extrémité supérieure 46 de la partie tubulaire inférieure 40.

La partie tubulaire supérieure 42 comprend aussi au moins un logement 60, 62, ici au nombre de deux, recevant chacun un palier de guidage 64 (figure 5) pour guider radialement le tube 20 lors de son coulissement entre les positions rétractée et déployée.

Pour simplifier la description, seul le palier de guidage 64 associé à l'extrémité supérieure du tube 20 est annoté sur les figures.

Dans l'exemple illustré, les logements 60 et 62 sont formés par un élargissement local du corps 54, au niveau des extrémités 56 et 58, respectivement.

De préférence, les parois intérieures des parties tubulaires inférieure 40 et supérieure 42 sont maintenues à distance du tube 20 sans contact avec le tube 20.

Par exemple, le diamètre interne de chacun du corps 44 et du corps 54 est strictement supérieur au diamètre externe du tube 20. En pratique, toutefois, le diamètre interne des corps 44 et 54 est inférieur au diamètre du rebord extérieur 39 du tube 20, le rebord extérieur 39 n'étant pas destiné à pénétrer à l'intérieur du corps 22.

On comprend donc que le contact entre le corps 22 et le tube 20 est de préférence uniquement réalisé au niveau des paliers de guidage 64, qui sont eux-mêmes installés uniquement dans la partie tubulaire supérieure 42.

Selon des modes de mise en oeuvre, la partie tubulaire supérieure 42 comprend aussi un dispositif de fixation 66 comportant un plateau 68 de fixation du vérin 24.

En pratique, lors de l'assemblage du système d'alimentation 4, le tube 20 peut être inséré dans le corps 22 par l'extrémité supérieure 56 sans avoir besoin d'accéder à la partie tubulaire inférieure 40, ce qui simplifie les opérations de manutention.

Le vérin 24 est adapté pour déplacer le tube 20 entre les positions déployée et rétractée, par exemple en réponse à un signal de commande émis depuis l'intérieur 6 du sous-marin 2.

Comme illustré sur la figure 5, le vérin 24 est placé à l'extérieur du corps 22, de préférence en étant fixé au corps 22, ici au moyen des supports de fixation 52 et 66.

En plaçant le vérin 24 à l'extérieur du corps 22, on évite de restreindre localement le débit d'air frais à l'intérieur du tube 20, par comparaison avec les systèmes d'alimentation connus dans lesquels le vérin est typiquement logé à l'intérieur du tube de prélèvement d'air frais. Placer le vérin 24 à l'extérieur du corps 22 permet donc de réduire les pertes de charge dans le tube 20.

Selon des modes de mise en oeuvre, le vérin 24 comporte une enveloppe mobile 70 et une tige 72, ou piston, fixe le long de l'axe longitudinal Z par rapport à l'enveloppe mobile 70. La référence 74 désigne une extrémité supérieure de l'enveloppe mobile 70.

La tige fixe 72 est solidaire du corps 22. La tige fixe 72 est ici connectée au support 52 de fixation. L'enveloppe 70 est mobile en translation le long de l'axe longitudinal Z par rapport à la tige fixe 72 et par rapport au corps 22.

Dans l'exemple illustré, l'enveloppe 70 est connectée à la pièce de liaison 76 par l'extrémité 74. La pièce de liaison 76 est connectée directement au rebord d'extrémité 39 du tube 20 et surmonte l'extrémité supérieure 56 du corps 22. Par exemple, l'enveloppe 70 est montée coulissante dans un orifice traversant du plateau de fixation 68.

Le clapet 26 est destiné à fermer le tube 20 de façon étanche pour éviter l'entrée d'eau à l'intérieur du tube 20 lorsque le système d'alimentation 4 est complètement immergé.

Plus précisément, le clapet 26 est mobile en translation le long de l'axe longitudinal Z entre une position de fermeture, dans laquelle il ferme hermétiquement l'extrémité supérieure 34 du tube 20, et une position d'ouverture du tube 20, dans laquelle l'extrémité supérieure 34 est ouverte pour autoriser le passage de l'air. Sur la figure 5, le clapet 26 est illustré dans la position de fermeture.

Comme illustré sur les figures 4 et 5, le clapet 26 comporte une tête 80, ici avec une forme bombée à base circulaire centrée sur l'axe longitudinal Z, par exemple en forme de champignon ou de cloche, et une portion centrale 82 cylindrique creuse qui s'étend le long de l'axe longitudinal Z et qui délimite un volume intérieur 84.

De préférence, le clapet 26 présente une forme ayant une symétrie de révolution autour de l'axe longitudinal Z.

Le clapet 26 comprend ici une portion de fermeture 86 qui forme une paroi de fond inférieure de la tête 80.

Dans l'exemple illustré, la tête 80 comporte en outre une gorge 88 circulaire, ou logement, qui débouche sur une face inférieure de la tête 80 et qui s'étend entre un bord radial extérieur de la portion de fermeture 86 et le pourtour extérieur de la tête 80.

Dans une configuration assemblée du système d'alimentation 4, la tête 80 du clapet 26 est placée à l'extérieur du tube 20. En d'autres termes, la tête 80 du clapet 26 se trouve à l'extérieur du tube 20 aussi bien dans la position d'ouverture que la position de fermeture.

De plus, dans la position de fermeture, la tête 80 du clapet 26 repose sur un siège formé par le rebord d'extrémité 39 du tube 20. Par exemple, en position fermée, le pourtour extérieur de la base inférieure de la tête 80 repose directement sur le rebord d'extrémité 39.

Grâce à la disposition du clapet 26, la section latérale d'aspiration d'air du tube 20 est augmentée au niveau de l'extrémité supérieure 34, par comparaison avec les systèmes connus dans lesquels le clapet est intégralement reçu à l'intérieur du tube d'air frais. Les pertes de charge dans le tube 20 sont ainsi réduites.

Le système d'alimentation 4 comporte également une structure de support 90 incluant ici une partie supérieure 92 et une base 94, ainsi qu'un actionneur 96 monté sur la structure de support 90.

La structure de support 90 est montée solidaire de l'extrémité supérieure 34 du tube 20. Par exemple, la base 94 est fixée au rebord supérieur 39.

L'actionneur 96 est adapté pour ouvrir le clapet 26, par exemple en réponse à un signal de commande émis depuis l'intérieur du sous-marin. L'actionneur 96 est ici un vérin à piston hydraulique ou pneumatique, alimenté par un conduit d'alimentation 98, qui est connecté au clapet 26 pour le déplacer vers sa position d'ouverture. Dans l'exemple illustré, la portion centrale 82 coulisse autour d'un piston 100 de l'actionneur 96 qui est fixe.

L'actionneur 96, lorsqu'il est activé, soulève le clapet 26 et l'éloigne de son siège formé par le rebord d'extrémité 39.

Le système d'alimentation 4 comprend également un ressort 102 agencé pour assurer la fermeture du clapet 26 lorsque l'actionneur 96 n'est pas activé.

Par exemple, le ressort 102 est un ressort hélicoïdal à compression exerçant une force de rappel selon l'axe longitudinal Z pour ramener le clapet 26 vers la position de fermeture.

De préférence, le ressort 102 est placé dans le volume creux 84 à l'intérieur de la portion centrale 82 du clapet et s'étend ainsi sous la tête 80 du clapet 26. Lorsque le clapet 26 est dans la position de fermeture, le ressort 102 est ainsi reçu à l'intérieur du tube 20.

Cette disposition permet d'éviter que le ressort 102 se trouve en contact avec de l'eau au moment de la fermeture du clapet 26 lorsque le système d'alimentation 4 est immergé, ce qui permet de limiter le risque de corrosion et donc d'améliorer la durée de vie et la fiabilité du ressort 102.

De façon avantageuse, l'étanchéité de la fermeture du tube 20 par le clapet 26 est assurée grâce à un premier dispositif d'étanchéité 110 et à un deuxième dispositif d'étanchéité 112.

Le premier dispositif d'étanchéité 110 comporte au moins un joint d'étanchéité et est placé entre la tête 80 du clapet 26 et le rebord d'extrémité 39, par exemple, en étant reçu à l'intérieur de la gorge 88. De préférence, le dispositif d'étanchéité 110 comporte deux joints d'étanchéité de technologie différente, de manière à assurer une redondance et d'améliorer l'étanchéité. Par exemple, un joint d'étanchéité torique est placé au fond de la gorge 88 et un joint d'étanchéité plat est placé dans la gorge 88 au contact du joint d'étanchéité torique de manière à fermer la gorge 88.

Le deuxième dispositif d'étanchéité 112 comporte un joint d'étanchéité placé entre la pièce de liaison 26 solidaire de l'extrémité supérieure 34 du tube 20 et le palier de guidage 64 associé à l'extrémité supérieure du tube 20, à savoir, ici, le palier de guidage 64 reçu dans le logement 60.

On comprend donc que les dispositifs d'étanchéité 110 et 112 sont disposés en-dessous de la tête 80 du clapet 26 et au-dessus du palier de guidage 64.

Le système d'alimentation 4 est ainsi adapté pour résister à la pression exercée par l'eau lorsque le sous-marin 2 est immergé à sa profondeur d'immersion maximale. En d'autres termes, lorsque le système d'alimentation 4 est complètement immergé, l'eau ne peut pas pénétrer à l'intérieur du tube 20, à condition d'avoir fermé le clapet 26 avant l'immersion. Cette résistance est en partie due au fait que le tube 20 est monté à l'intérieur du corps 22, ce qui améliore la tenue mécanique et l'étanchéité du système d'alimentation.

Selon des modes de mise en oeuvre, au moins un joint d'étanchéité additionnel 114 est installé sur le palier de guidage 64 associé à l'extrémité supérieure du tube 20.

Dans l'exemple illustré, les joints d'étanchéité additionnels 114 sont au nombre de deux et sont disposés l'un au-dessus de l'autre.

Par exemple, les joints d'étanchéité 112 et 114 sont des joints toriques de forme circulaire centrés sur l'axe longitudinal Z. De préférence, les joints d'étanchéité 112 et 114 sont réalisés en matériau élastomère.

En outre, le palier de guidage 64 comporte ici un racleur 116, par exemple réalisé sous la forme d'une lame en forme d'anneau, apte à venir en contact direct avec le pourtour des parois extérieures du tube 20. Le racleur 116 est ici disposé au-dessus du au moins un joint d'étanchéité additionnel 114.

De façon avantageuse, le système d'alimentation 4 comporte un volume de lubrifiant 118, par exemple de la graisse, afin de lubrifier les parois extérieures du tube 20 lors de chaque déplacement entre les positions rétractée et déployée.

Le lubrifiant est placé à l'intérieur du corps 22, entre les deux paliers 64, de préférence sur au moins une partie des faces du palier de guidage 64 qui sont en contact avec les parois extérieures du tube 20. Le volume de lubrifiant 118 est ici confiné dans une zone délimitée de part et d'autre par les joints d'étanchéité respectifs des deux paliers de guidage 64.

Avantageusement, la partie supérieure 42 du corps 22 comporte un orifice d'alimentation 119 permettant de recharger le volume de lubrifiant 118.

De façon particulièrement avantageuse, lorsque le tube 20 est déplacé vers la position rétractée, le racleur 116 racle les parois extérieures du tube 20, ce qui les nettoie et les débarrasse des salissures résultant de l'exposition à l'eau de mer.

De cette manière, on limite la quantité de salissures qui peuvent pénétrer à l'intérieur du corps 22. De plus, cela améliore l'effet de la lubrication, puisque la surface du tube 20 est nettoyée avant d'appliquer le lubrifiant.

Selon des exemples, le carénage 30 comporte une enveloppe extérieure, par exemple en matière métallique ou en matériau composite, qui entoure au moins partiellement la tête du système d'alimentation 4 lorsque le tube 20 est dans la position rétractée. Par exemple, le carénage 30 est solidaire du tube 20, ici en étant monté sur la pièce de liaison 76.

De préférence, le carénage 30 présente une forme furtive, c'est-à-dire une forme permettant de réduire la réflexion de signaux radar.

En variante, le carénage 30 présente une forme permettant de réduire la résistance hydrodynamique lorsque le sous-marin 2 se déplace dans l'eau.

Selon des modes de réalisation, le tube auxiliaire 32, aussi nommé « tube de traînard », ménage un passage entre l'intérieur 6 et l'extérieur du sous-marin 2 pour des câbles et/ou des conduites, notamment le conduit d'alimentation 98. Dans l'exemple illustré, le tube auxiliaire 32 est monté sur l'enveloppe fixe 70 du vérin 24 et s'étend selon l'axe longitudinal Z. Le tube auxiliaire 32 peut être un tube télescopique.

Le tube auxiliaire 32, en étant connecté au corps 22, renforce la tenue mécanique du corps 22 lors de l'immersion en augmentant la raideur transversale du corps 22.

En variante, le système d'alimentation 4 peut être utilisé indépendamment du tube auxiliaire 32.

Les modes de réalisation et les variantes envisagés ci-dessus peuvent être combinés entre eux pour générer de nouveaux modes de réalisation.

## Revendications

1. Système d'alimentation (4) en air frais pour un sous-marin (2), comportant :
- un corps (22) s'étendant selon un axe longitudinal (Z) ;
- un tube de prélèvement (20) d'air frais, monté coulissant le long de l'axe longitudinal (Z) à l'intérieur du corps (22) entre une position rétractée et une position déployée ;
- un clapet (26) mobile en translation le long de l'axe longitudinal (Z) entre une position de fermeture d'une extrémité supérieure (34) du tube de prélèvement et une position d'ouverture du tube de prélèvement ;
une tête (80) du clapet (26) étant placée à l'extérieur du tube de prélèvement (20) et, dans la position de fermeture, la tête (80) du clapet (26) repose sur un siège formé par un rebord d'extrémité (39) du tube de prélèvement (20) présentant un diamètre supérieur au diamètre intérieur du tube de prélèvement (20) ; **caractérisé en ce que** le système d'alimentation comporte un vérin (24) adapté pour déplacer le tube de prélèvement (20) entre les positions déployée et rétractée, le vérin (24) étant placé à l'extérieur du corps (22).

2. Système d'alimentation (4) selon la revendication 1 ou la revendication 2, **caractérisé en ce que** le corps (22) comporte une partie tubulaire inférieure (40) et une partie tubulaire supérieure (42) alignées le long de l'axe longitudinal (Z) et fixées l'une à l'autre, la partie tubulaire supérieure comportant au moins un logement (60, 62) recevant un palier de guidage (64) pour guider radialement le tube de prélèvement (20) en coulissement entre les positions rétractée et déployée, les parois intérieures des parties tubulaires inférieure et supérieure (40, 42) étant maintenues à distance du tube de prélèvement (20) sans contact avec le tube de prélèvement.

3. Système d'alimentation (4) selon l'une quelconque des revendications précédentes, **caractérisé en ce que** le tube de prélèvement (20) présente, au niveau de son extrémité supérieure (34), des parois évasées (38) qui s'écartent en direction du rebord d'extrémité (39).

4. Système d'alimentation (4) selon l'une quelconque des revendications précédentes, **caractérisé en ce qu'**il comporte en outre :
- une structure de support (90) solidaire de l'extrémité supérieure (34) du tube de prélèvement (20),
- un actionneur (96) monté sur la structure de support (90) pour ouvrir le clapet, et
- un ressort (102) de fermeture du clapet,
et **en ce que** le ressort (102) est placé à l'intérieur d'une portion creuse (82) du clapet (26) s'étendant sous la tête (80) du clapet (26), le ressort (102) étant reçu à l'intérieur du tube de prélèvement (20) lorsque le clapet (26) est dans la position de fermeture.

5. Système d'alimentation (4) selon l'une quelconque des revendications précédentes, **caractérisé en ce que** le vérin (24) comporte une enveloppe (70) mobile en translation le long de l'axe longitudinal (Z) par rapport à une tige fixe (72) du vérin (24) solidaire du corps (22), l'enveloppe mobile (70) étant connectée à l'extrémité supérieure (34) du tube de prélèvement (20) par l'intermédiaire d'une pièce de liaison (76) solidaire de l'extrémité supérieure (34) du tube de prélèvement (20).

6. Système d'alimentation (4) selon la revendication 5, **caractérisé en ce qu'**il comporte en outre un tube auxiliaire (32) monté sur l'enveloppe mobile (70) du vérin (24) et s'étendant selon l'axe longitudinal (Z).

7. Système d'alimentation (4) selon l'une quelconque des revendications précédentes, **caractérisé en ce qu'**il comporte un premier dispositif d'étanchéité (110) entre la tête (80) du clapet (26) et le rebord d'extrémité (39), et un deuxième dispositif d'étanchéité (112) entre une pièce de liaison (76) solidaire de l'extrémité supérieure (34) du tube de prélèvement (20) et un palier de guidage (64) monté dans le corps (22).

8. Système d'alimentation (4) selon la revendication 7, **caractérisé en ce qu'**il comporte un volume de lubrifiant (118) placé à l'intérieur du corps (22) en dessous des premier et deuxième dispositif d'étanchéité (110, 112) et en regard du tube de prélèvement (20).

9. Sous-marin (2) **caractérisé en ce qu'**il comporte un système d'alimentation (4) en air frais conforme à l'une quelconque des revendications précédentes.

## Patentansprüche

1. Frischluftzufuhrsystem (4) für ein Unterseeboot (2), umfassend:
- einen Körper (22), der sich entlang einer Längsachse (Z) erstreckt;
- ein Frischluftsammelrohr (20), das gleitend entlang der Längsachse (Z) im Inneren des Körpers (22) zwischen einer eingezogenen und einer ausgefahrenen Position montiert ist;
- eine Klappe (26), die entlang der Längsachse (Z) zwischen einer Position, in der ein oberes Ende (34) des Sammelrohrs geschlossen ist, und einer Position, in der das Sammelrohr geöffnet ist, translatorisch beweglich ist;
wobei ein Kopf (80) der Klappe (26) außerhalb des Sammelrohrs (20) angeordnet ist und der Kopf (80) der Klappe (26) in der geschlossenen Position auf einem Sitz ruht, der durch einen Abschlussrand (39) des Sammelrohrs (20) gebildet wird, der einen Durchmesser aufweist, der größer ist als der Innendurchmesser des Sammelrohrs (20); **dadurch gekennzeichnet, dass** das Zuführsystem einen Zylinder (24) umfasst, der angepasst ist, um das Sammelrohr (20) zwischen der ausgefahrenen und der eingefahrenen Position zu bewegen, wobei der Zylinder (24) außerhalb des Körpers (22) platziert ist.

2. Zuführsystem (4) nach Anspruch 1 oder 2, **dadurch gekennzeichnet, dass** der Körper (22) einen unteren röhrenförmigen Teil (40) und einen oberen röhrenförmigen Teil (42) umfasst, die entlang der Längsachse (Z) ausgerichtet und aneinander befestigt sind, der obere röhrenförmige Teil umfassend mindestens eine Aufnahme (60, 62), die ein Führungslager (64) zum radialen Führen des Sammelrohrs (20) beim Gleiten zwischen der eingefahrenen und der ausgefahrenen Position aufnimmt, wobei die Innenwände des unteren und des oberen röhrenförmigen Teils (40, 42) von dem Sammelrohr (20) beabstandet ohne Kontakt mit dem Sammelrohr gehalten werden.

3. Zuführsystem (4) nach einem der vorherigen Ansprüche, **dadurch gekennzeichnet, dass** das Sammelrohr (20) an seinem oberen Ende (34) aufgeweitete Wände (38) aufweist, die sich in Richtung des Abschlussrands (39) aufspreizen.

4. Zuführsystem (4) nach einem der vorherigen Ansprüche, **dadurch gekennzeichnet, dass** sie ferner Folgendes umfasst:
- eine Trägerstruktur (90), die fest mit dem oberen Ende (34) des Sammelrohrs (20) verbunden ist,
- einen Aktuator (96), der an der Trägerstruktur (90) montiert ist, um die Klappe zu öffnen, und
- eine Feder (102) zum Schließen der Klappe,
und dass die Feder (102) innerhalb eines hohlen Abschnitts (82) der Klappe (26) angeordnet ist, der sich unter dem Kopf (80) der Klappe (26) erstreckt, wobei die Feder (102) innerhalb des Sammelrohrs (20) aufgenommen ist, wenn die Klappe (26) in der geschlossenen Position ist.

5. Zuführsystem (4) nach einem der vorherigen Ansprüche, **dadurch gekennzeichnet, dass** der Zylinder (24) eine Hülle (70) umfasst, die entlang der Längsachse (Z) in Bezug auf eine feste Stange (72) des Zylinders (24), die fest mit dem Körper (22) verbunden ist, translatorisch beweglich ist, wobei die bewegliche Hülle (70) über ein Verbindungsstück (76), das fest mit dem oberen Ende (34) des Sammelrohrs (20) verbunden ist, mit dem oberen Ende (34) des Sammelrohrs (20) verbunden ist.

6. Zuführsystem (4) nach Anspruch 5, **dadurch gekennzeichnet, dass** es ferner ein Hilfsrohr (32) umfasst, das auf dem beweglichen Mantel (70) des Zylinders (24) montiert ist und sich entlang der Längsachse (Z) erstreckt.

7. Versorgungssystem (4) nach einem der vorherigen Ansprüche, **dadurch gekennzeichnet, dass** es eine erste Dichtungsvorrichtung (110) zwischen dem Kopf (80) der Klappe (26) und der Endleiste (39) und eine zweite Dichtungsvorrichtung (112) zwischen einem Verbindungsstück (76), das fest mit dem oberen Ende (34) des Sammelrohrs (20) verbunden ist, und einem im Körper (22) montierten Führungslager (64) umfasst.

8. Zuführsystem (4) nach Anspruch 7, **dadurch gekennzeichnet, dass** es ein Schmiermittelvolumen (118) umfasst, das in dem Inneren des Körpers (22) unterhalb der ersten und zweiten Dichtungsvorrichtung (110, 112) und gegenüber dem Sammelrohr (20) platziert ist.

9. Unterseeboot (2), **dadurch gekennzeichnet, dass** es ein Frischluftzufuhrsystem (4) nach einem der vorherigen Ansprüche umfasst.

## Claims

1. Fresh air supply system (4) for a submarine (2), comprising:
- a body (22) extending along a longitudinal axis (Z);
- a fresh air collection pipe (20), mounted to slide along the longitudinal axis (Z) inside the body (22) between a retracted position and an extended position;
- a valve (26) translatably mobile along the longitudinal axis (Z) between a closed position of an upper end (34) of the collection pipe and an open position of the collection pipe;
**characterized in that** a head (80) of the valve (26) is placed outside the collection pipe (20), **in that**, in the closed position, the head (80) of the valve (26) rests on a seat formed by an end lip (39) of the collection pipe (20) having a diameter greater than the internal diameter of the collection pipe (20), and **in that** it the supply system comprises a jack (24) designed to move the collection pipe (20) between the extended and retracted positions, the jack (24) being placed outside the body (22).

2. Supply system (4) according to claim 1, **characterized in that** the body (22) comprises a lower tubular part (40) and an upper tubular part (42) aligned along the longitudinal axis (Z) and fixed to one another, the upper tubular part comprising at least one housing (60, 62) housing a guide bearing (64) for radially guiding the collection pipe (20) as it slides between the retracted and extended positions, the inner walls of the lower and upper tubular portions (40, 42) being kept at a distance from the collection pipe (20) and without contact with the collection pipe.

3. Supply system (4) according to any one of the preceding claims, **characterized in that** the collection pipe (20) has, at its upper end (34), flared walls (38) which diverge towards the end tip (39).

4. Supply system (4) according to any one of the preceding claims, **characterized in that** it further comprises:
- a support structure (90) integral with the upper end (34) of the collection pipe (20),
- an actuator (96) mounted on the support structure (90) to open the valve, and
- a spring (102) for closing the valve,
and **in that** the spring (102) is placed within a hollow portion (82) of the valve (26) extending below the head (80) of the valve (26), the spring (102) being housed inside the collection pipe (20) when the valve (26) is in the closed position.

5. Supply system (4) according to any one of the preceding claims, **characterized in that** the jack (24) comprises a casing (70) translatably mobile along the longitudinal axis (Z) relative to a fixed rod (72) of the jack (24) integral with the body (22), the movable casing (70) being connected to the upper end (34) of the collection pipe (20) by means of a connecting part (76) integral with the upper end (34) of the collection pipe (20).

6. Supply system (4) according to claim 5, **characterized in that** it further comprises an auxiliary pipe (32) mounted on the movable casing (70) of the jack (24) and extending along the longitudinal axis (Z).

7. Supply system (4) according to any one of the preceding claims, **characterized in that** it comprises a first sealing device (110) between the head (80) of the valve (26) and the end lip (39), and a second sealing device (112) between a connecting part (76) integral with the upper end (34) of the collection pipe (20) and a guide bearing (64) mounted in the body (22).

8. Supply system (4) according to claim 7, **characterized in that** it comprises a volume of lubricant (118) placed inside the body (22) below the first and second sealing devices (110, 112) and opposite the collection pipe (20).

9. Submarine (2) **characterized in that** it comprises a fresh air supply system (4) according to any one of the preceding claims.
